Europäisches Patentamt

European Patent Office

Office européen des brevets

(19)

(11) Veröffentlichungsnummer : **0 129 537 B2**

(12) # NEUE EUROPÄISCHE PATENTSCHRIFT

(45) Veröffentlichungstag der neuen Patentschrift :
01.04.92 Patentblatt 92/14

(51) Int. Cl.⁵ : **F16D 3/41, F16D 3/00**

(21) Anmeldenummer : **84890111.2**

(22) Anmeldetag : **14.06.84**

(54) **Gelenkwellenantrieb für ein Getriebe, insbesondere für das Verteilergetriebe eines Kraftfahrzeuges mit Allradantrieb.**

(30) Priorität : **15.06.83 AT 2206/83**

(43) Veröffentlichungstag der Anmeldung :
**27.12.84 Patentblatt 84/52**

(45) Bekanntmachung des Hinweises auf die
Patenterteilung :
**12.11.86 Patentblatt 86/46**

(45) Bekanntmachung des Hinweises auf die
Entscheidung über den Einspruch :
**01.04.92 Patentblatt 92/14**

(84) Benannte Vertragsstaaten :
**CH DE FR GB LI**

(56) Entgegenhaltungen :
**DE-A- 2 613 656
DE-A- 2 809 665**

(56) Entgegenhaltungen :
**DE-C- 629 782
FR-A- 1 408 856
US-A- 2 064 392
US-A- 2 067 286**

(73) Patentinhaber : **Steyr-Daimler-Puch
Aktiengesellschaft
Kärntnerring 7
A-1010 Wien (AT)**

(72) Erfinder : **Lenhard-Backhaus, Hugo, Dipl.-Ing.
Daffingergasse 6/2/12
A-1030 Wien (AT)**
Erfinder : **Kauer, Erhard
am Schanzgraben 2
A-7081 Schützen am Gebirge (AT)**

(74) Vertreter : **Schieschke, Klaus, Dipl.-Ing.
Patentanwälte Dipl.-Ing. E. Eder Dipl.-Ing. K.
Schieschke Elisabethstrasse 34
W-8000 München 40 (DE)**

EP 0 129 537 B2

Jouve, 18, rue Saint-Denis, 75001 PARIS

## Beschreibung

Die Erfindung betrifft einen Gelenkwellenantrieb für ein Getriebe nach dem Oberbegriff des Patentanspruch.

Ein solcher Gelenkwellenantrieb ist bereits bekannt (DE-A-2 613 656), wobei es darum geht, bei vergleichsweise enger Anordnung von Motor und Getriebeblock einerseits und Verteilergetriebe andererseits eine ausreichende Länge der Gelenkwelle zu erzielen. Dabei besteht die Gelenkwelle aber aus zwei in üblicher Weise teleskopartig ineinander geschobenen Teilen, die innerhalb der hohlen Nabe des Antriebsritzels des Getriebes liegen und dadurch zu einem vergrößerten Naben- bzw. Ritzeldurchmesser zwingen. Ein vergrößerter Ritzeldurchmesser führt wegen der erhöhten Umfangsgeschwindigkeit des ineinander greifenden Zahnradpaares zu einem verstärkten Geräuschpegel und wegen der Einhaltung bestimmter Übersetzungsverhältnisse auch zu einer Vergrößerung der Gesamtabmessungen und des Gewichtes des Verteilergetriebes. Wird der Nabeninnendurchmesser zur Verringerung des Ritzelteilkreisdurchmessers vermindert, so hat die teleskopische Gelenkwelle innerhalb der hohlen Ritzelnabe zu wenig Spiel, d. h. es ergibt sich eine Verringerung des möglichen Schwenkwinkels. Bei der bekannten Ausführung sind ferner der treibende Gelenkteil und der rückführende Gelenkteil in bezug auf das kreuzförmige Kupplungsstück an derselben Seite, nämlich getriebeseitig, angeordnet. Es liegt daher die Ebene des kreuzförmigen Kupplungsstückes und damit die Schwenkachse der Gelenkwelle vom Getriebe verhältnismäßig weit ab, wodurch sich der mögliche Schwenkausschlag der Gelenkwelle innerhalb der hohlen Nabe des Antriebsritzels weiter verringert.

Es ist auch aus der US-A-20 64 392 (SWENSON) ein herkömmlicher Antriebsstrang für eine angetriebene Achse eines Kraftfahrzeuges bekannt, bei dem jedoch eine ortsfest gelagerte Getriebewelle in der Nabe des treibenden Teiles eines Kreuzgelenkes drehfest, aber längsverschiebbar gelagert ist. Das Kupplungsstück des Kreuzgelenkes ist über eine einstückige Gelenkwelle und ein weiteres Kreuzgelenk mit einem Achsdifferential verbunden und besteht aus einem die getriebene Gelenkwelle bzw. die Nabe des treibenden Teiles des Kreuzgelenkes mit Spiel umschließenden Ring mit kreuzförmig angeordneten, radialen Außenzapfen. Der treibende und der getriebene Teil des Kreuzgelenkes sind an gegenüberliegenden Seiten des Gelenkes angeordnet. Eine Rückführung des Antriebes über das Kreuzgelenk ist jedoch nicht möglich, da dessen treibender Teil einer solchen im Weg stehen würde.

Weiterhin ist eine Kreuzgelenkkupplung bekannt mit Vielkeilwelle und -nabe (DE-A 28 09 665). Auf der Nabe ist eine Gelenkgabel mit sich nach hinten erstreckenden Gabelaugen angeordnet. An Zapfen der Gabelaugen ist ein Zwischenglied schwenkbar gelagert. Eine zweite Gelenkgabel weist einen Anschlußflansch auf, welcher mit einem Zahnkranz verschraubt ist.

Demnach liegt der Erfindung die Aufgabe zugrunde, den eingangs geschilderten Gelenkwellenantrieb so zu verbessern, daß bei möglichst geringem Durchmesser des Antriebsritzels ein relativ großer Schwenkwinkel der Gelenkwelle erreichbar ist.

Die Erfindung löst die gestellte Aufgabe mit dem Merkmalen im kennzeichnenden Teil des Patentanspruchs.

Da also die Gelenkwelle einstückig ausgebildet ist und innerhalb der Nabe des Antriebsritzels nicht aus zwei teleskopartig ineinander geschobenen Teilen besteht, läßt sich der Gelenkwellengesamtdurchmesser und damit auch der Naben- bzw. Ritzeldurchmesser ohne Festigkeitsverlust verringern bzw. es ist bei gleichem Durchmesser eine Erhöhung des übertragenden Drehmomentes möglich. Trotz der einstückigen Wellenausbildung ist die erforderliche Längenveränderung möglich, da die Welle ja in der Nabe des treibenden Teiles des Kreuzgelenkes längsverschiebbar lagert. Da ferner der Ring des Kupplungsstückes zwischen dem treibenden und dem rückführenden Teil des Kreuzgelenkes angeordnet ist, sich also das Kupplungsstück ganz eng an die Nabe des Antriebsritzels heranrücken läßt, ist der Schwenkausschlag der Gelenkwelle innerhalb der Nabe vermindert, d. h. es kann bei gleicher Nabenlänge der Schwenkwinkel vergrößert oder bei gleichem Schwenkwinkel die Nabe verkürzt oder deren Innendurchmesser verringert werden.

Schließlich wird das Schwenken der Gelenkwelle erleichtert, wenn, wie aus der US-A-2 064 392 bereits bekannt der Ring des Kupplungsstückes innen, sich zu den Stirnflächen hin weitend, doppelkonisch ausgebildet ist.

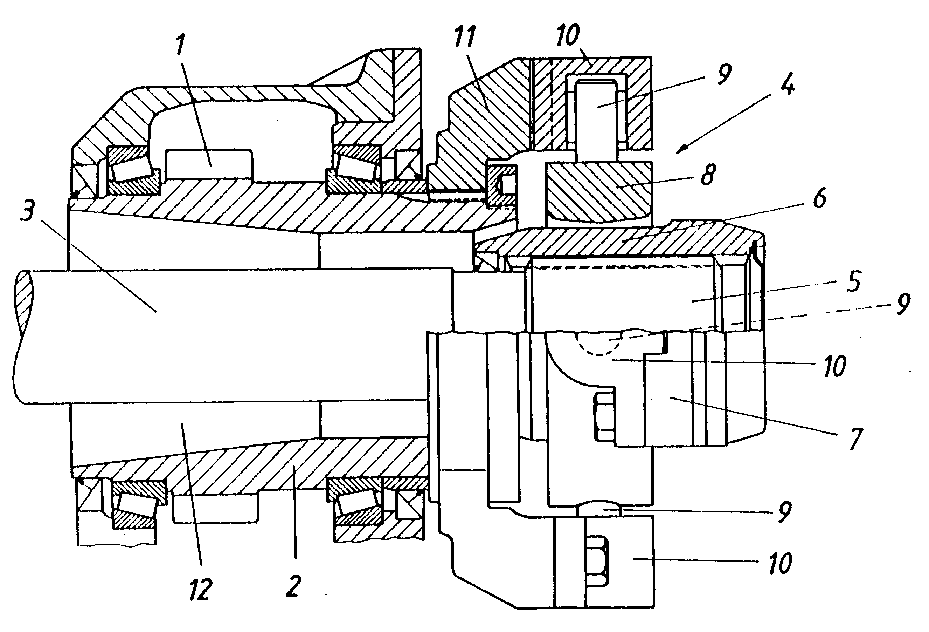

Die Zeichnung zeigt als Ausführungsbeispiel den Gelenkwellenantrieb für das Verteilergetriebe eines Kraftfahrzeuges mit Allradantrieb im Teilschnitt.

Ein Antriebsritzel 1 eines Verteilergetriebes besitzt eine hohle Nabe 2, die von einer Gelenkwelle 3 durchsetzt ist, wobei das motorseitige Gelenk der Gelenkwelle 3 nicht dargestellt ist. Die Gelenkwelle 3 ist über ein zweites Kreuzgelenk 4 rückführend mit der Nabe 2 des Antriebsritzels 1 verbunden, wobei das Kreuzgelenk 4 zur Hälfte im Schnitt und zur Hälfte in Ansicht dargestellt ist. Ein Ende 5 der Gelenkwelle 3 ist in einer Nabe 6 eines treibenden Teiles 7 des Kreuzgelenkes 4 drehfest, aber längsverschiebbar gelagert. Ein Kupplungsstück des Kreuzgelenkes 4 besteht aus einem die Nabe 6 mit Spiel umschließenden Ring 8 mit kreuzförmig angeordneten radialen Außenzapfen 9. Diese Außenzapfen 9 sind in Lagerböcken 10 gelagert, die am treibenden Teil 7 bzw. an einem rückführenden Teil 11 des Kreuzgelenkes 4 angeschraubt sind, wobei der rückführende Teil 11 drehfest auf der verlängerten Nabe 2 des Antriebsritzels 1 sitzt. Es ist ersichtlich, daß der rückführende Teil 11 des Kreuzgelenkes 4 an der Getriebeseite und der treibende Teil 7 an der gegenüberliegenden Seite des Kupplungsstückes 8, 9 angeordnet sind.

Die Nabe 2 des Antriebsritzels 1 weist eine Bohrung 12 auf, die sich zu dem vom Kreuzgelenk 4 abgekehrten Nabenende hin konisch weitet. Der Ring 8 des Kupplungsstückes 8, 9 ist innen doppelkonisch ausgebildet wobei er sich jeweils von der Mitte weg zu den Stirnflächen weitet. Auf diese Weise wird ein verhältnismäßig großer Schwenkwinkel der Gelenkwelle 3 innerhalb der Nabe 2 ermöglicht.

## Patentansprüche

1. Gelenkwellenantrieb für ein Getriebe, insbesondere für das Verteilergetriebe eines Kraftfahrzeuges mit Allradantrieb, bei dem die Gelenkwelle (3) die hohle Nabe (2) des Antriebsritzels (1) des Getriebes durchsetzt und über ein Kreuzgelenk (4) rückführend mit der Nabe des Antriebsritzels (1) verbunden ist, wobei die Nabe (2) des Antriebsritzels (1) eine sich zum vom Kreuzgelenk (4) abgekehrten Nabenende hin konisch weitende Bohrung (12) aufweist, dadurch gekennzeichnet,

daß die Gelenkwelle (3) zwischen ihren Gelenken einstückig ausgebildet ist und in der im Bereich des Kreuzgelenkes vorgesehenen Nabe (6) des treibenden Teils (7) des Kreuzgelenks (4) drehfest, aber längsverschiebbar gelagert ist,

daß das Kupplungsstück (8, 9) des Kreuzgelenks (4) aus einem die Gelenkwelle (3) bzw. die Nabe (6) des treibenden Teiles (7) mit Spiel umschließenden Ring (8) mit kreuzförmig angeordneten, radialen Außenzapfen (9) besteht,

daß der rückführende Teil (11) des Kreuzgelenks (4) an der Getriebeseite und der treibende Teil (7) an der gegenüberliegenden Seite des Kupplungsstückes (8, 9) angeordnet sind

daß der rückführende Teil (11) drehfest außen auf der verlängerten Nabe (2) des Antriebsritzels (1) sitzt und daß der Ring (8) des Kupplungsstückes (8, 9) innen, sich zu den Stirnflächen hin weitend, doppelkonisch ausgebildet ist.

## Claims

1. A cardan shaft drive for a transmission, in particular for the divider transmission of a four-wheel-drive vehicle, in which the cardan shaft (3) passes through the hollow hub (2) of the driving pinion (1) of the transmission and is connected in a reversing manner to the hub of the driving pinion by way of a cardan joint (4), the hub (2) of the driving pinion (1) having a bore (12) which widens in a tapered manner towards the hub end remote from the cardan joint (4), characterized,

in that the cardan shaft (3) is constructed in one piece between its joints and is mounted in the hub (6) - provided in the region of the cardan joint - of the driving part (7) of the cardan joint (4) so as to be rotationally rigid but longitudinally displaceable,

in that the connecting member (8,9) of the cardan joint (4) comprises a ring (8) which embraces the cardan shaft (3) or the hub (6) of the driving part (7) with play and which has radial outer pins (9) arranged in a cruciform manner,

in that the reversing part (11) of the cardan joint (4) is disposed on the transmission side and the driving part (7) is disposed on the opposite side of the connecting member (8,9),

in that the reversing part (11) is mounted rotationally rigid on the outside of the extended hub (2) of the driving pinion (1), and

in that the ring (8) of the connecting member (8,9) is constructed widening in a biconical manner towards the end faces.

## Revendications

1. Montage d'arbre de cardan pour transmission, notamment pour la boite de transfert d'un véhicule automobile avec propulsion par toutes les roues, dans laquelle l'arbre de cardan (3) traverse le moyeu creux (2) du pignon menant (1) de la transmission et est réuni en retour au moyeu de ce pignon menant par l'intermédiaire d'un joint de cardan (4), le moyeu (2) du pignon menant (1) présentant un alésage (12) s'élargissant en tronc de cone jusqu'à l'extrémité du moyeu opposée au joint de cardan (4), caractérisé,

en ce que l'arbre de cardan de la transmission (3) est réalisé d'un seul tenant entre ses articulations et il est supporté et guidé dans le moyeu (6) prévu dans la zone du joint de cardan de la partie menante (7) du joint de cardan (4) en étant calé en rotation, mais en pouvant coulisser longitudinalement,

en ce que les pièces d'accouplement (8,9) du joint de cardan (4) comprennent une bague (8) entourant avec jeu l'arbre de transmission (3) ou le moyeu (6) de la partie menante (7) munie de tourillons extérieurs radiaux (9) disposés en croix,

en ce que la partie menée (11) du joint de cardan (4) étant située du coté de la boite de vitesses et la partie menante (7) du côté opposé par rapport aux pièces d'accouplement (8,9),

en ce que la partie menée (11) est calé en rotation à l'extérieur du moyeu (2) prolongé du pignon menant (1) et

en ce que la bague (8) des pièces d'accouplement (8,9) est conformée intérieurement en double cone s'élargissant jusqu'aux faces frontales.